# EUROPEAN PATENT SPECIFICATION

(11) **EP 2 587 149 B1**
(45) Date of publication and mention of the grant of the patent: **18.06.2014**
(21) Application number: 11186501.0
(22) Date of filing: 25.10.2011
(51) Int. Cl.: F23J 15/00, F27B 7/42, F27B 7/20, F27D 17/00, C01C 1/08, B01D 53/90, F23J 7/00

(54) **Device for the reduction of the NOx content in exit gases from a rotary combustion furnace**
Vorrichtung zur Verringerung des NOx-Gehalts in Abgasen von einem Drehverbrennungsofen
Dispositif de réduction de contenu NOx dans les fumées d'un four à combustion rotative

(43) Date of publication of application: 01.05.2013
(73) Proprietor: Magnesitas Navarras S.A., 31630 Zubiri (ES)
(72) Inventor: Aparicio Martín, José Antonio, 31630 Zubiri (ES)
(74) Representative: Pons Ariño, Angel

(56) References cited:
- EP-A1- 1 634 853
- EP-A1- 2 161 069
- WO-A1-97/37754
- WO-A2-2007/082198
- US-A- 2 925 755
- US-A1- 2003 211 024

## Description

### OBJECT OF THE INVENTION

The object of the invention is a process for the reduction of the nitrogen oxide (NOx) content in the exit gases from rotary combustion furnaces wherein a decarbonisation process of a mineral is performed and where the temperature of the exit gases is normally less than 800ºC.

### BACKGROUND OF THE INVENTION

The rotary furnace is a chemical reactor wherein a decarbonisation process of a mineral, for example, magnesium carbonate, takes place. When in operation, the furnace rotates around its longitudinal axis. This type of furnaces may have a length of 100 m and a diameter of 4 m.

The rotary furnace comprises a tubular body; a heat source is located at one of the ends thereof and the exit gases are evacuated from the opposite end thereof.

In order for decarbonisation of the mineral to take place, radiant energy is needed, which is generated by the combustion of solid or liquid fuels in a burner that is normally located at the end of the tubular body wherefrom the carbonated products exit.

In said combustion, which takes place at a temperature greater than 2000ºC, Nitrogen oxides (NOx) are generated, which are finally emitted into the atmosphere through the exit gases from the furnace.

Current legislation limits the emission into the atmosphere of the NOx content in exit gases; for this reason, a process is required that makes it possible to reduce the NOx content in the exit gases such that the gases that are finally expelled into the atmosphere have a nitrogen oxide content below a given threshold.

In the state of the art, various processes are known that allow for the reduction of the nitrogen oxide content in the exit gases from a combustion process.

For example, it is known that additives may be introduced into furnaces in order to reduce the nitrogen oxide content; however, in the case of a rotary furnace, injection of the aforementioned additives into the adequate areas is complicated, due to the constant rotation of the tubular body around its longitudinal axis.

Also known are the so-called low-NOx burners, which, albeit an optimal solution from a technical standpoint, have the disadvantage of a high cost and a low NOx reduction capacity, which is always less than 20%.

Finally, it is known that urea or ammonia may be used to reduce the nitrogen oxide content in exit gases, the NOx being reduced to nitrogen and water. The optimal temperature range for the reaction between urea or ammonia and the exit gases to take place is with the exit gases at a temperature between 800ºC and 1100°C. In order to adjust the injection into the area of the furnace where the optimal temperature range is produced, different solutions are known, based on the introduction of injection nozzles at different levels of the furnace. However, this solution is not applicable to rotary furnaces, due to the fact that, as discussed above, they are in constant movement around their longitudinal axis.

In rotary furnaces used for the production of cement, it is common to spray urea at the end of the furnace wherefrom the exit gases are evacuated, since the gases exit at a temperature ranging between 800ºC and 1000ºC, which is therefore suitable to perform the treatment with urea.

However, when using rotary furnaces for magnesium carbonate, the gases at the furnace exit are cold gases, i.e. their temperature is less than 800ºC, for which reason it is not possible to extrapolate the aforementioned embodiment.

One option to solve the aforementioned problem would be to raise the temperature of the exit gases and, subsequently, perform the aforementioned urea spray. However, this option has a high energy cost.

In magnesium carbonate rotary furnaces, the temperature gradient between the entry and the exit of the furnace ranges from 650ºC to 2000ºC, and the temperature range between 800°C and 1000°C is located approximately in the central area of the furnace; this is the area where the aforementioned reaction between the exit gases and urea could take place. However, taking into consideration that the tubular body of the furnace constantly rotates around its longitudinal axis, it is practically impossible to inject urea in this area.

The present invention solves the aforementioned technical problems by means of a process, a device and an automated system that allow for the reduction of NOx in the exit gases from a rotary combustion furnace.

### DESCRIPTION OF THE INVENTION

According to the aforementioned description, the invention is applicable to a rotary furnace that comprises a tubular body at one of the ends whereof a heat source is located and the opposite end whereof is adapted for the evacuation of the exit gases.

A process for the reduction of the NOx content in the exit gases from the combustion process can comprise a step wherein at least one bullet of an ammonia-based compound is launched; this bullet is launched from one end of the tubular body to a target area, i.e. the area where the trajectory of the bullet ends and which is located between both ends of the tubular body and wherein the combustion temperature is between 800°C and 1100°C, such that the bullet breaks down into at least ammonia, which reacts with the combustion gases, thereby reducing the NOx content in the exit gases from the rotary furnace.

The ammonia-based compound may be urea.

An object of this invention is solved by the device designed for launching of the bullet according to claim 1, which allows for the reduction of NOx in the exit gases from the furnace.

The aforementioned device comprises:
- a tubular element the anterior end whereof is adapted to be located at one end of the rotary furnace,
- intake means into the tubular element, which are adapted for introduction of a bullet of an ammonia-based compound, and
- bullet propulsion means.

The tubular element and the bullet propulsion means are configured in such a way that the bullet may be launched to a target area located between both ends of the tubular body, wherein the operating combustion temperature of the target area of the furnace is between 800ºC and 1100ºC, such that the bullet breaks down into at least ammonia, which reacts with the combustion gases, thereby reducing the NOx content in the exit gases from the rotary furnace.

Finally, another object of the present invention is a system that makes it possible for the aforementioned NOx content reduction process to be automated. In this manner, the quantity and the periodicity of the introduction of urea into the system may be selected as a function of the NOx breakdown reaction produced. To this end, the automated system of the invention comprises:
- means for the measurement of the NOx content in the exit gases from the rotary furnace,
- a device designed for launching of a bullet of an ammonia-based compound, as discussed above, and
- control means, connected to the measurement means and the device, configured in such a way that the value of the measurement obtained by the measurement means is compared to a threshold value and, when the aforementioned value exceeds the threshold value, they act on the device such that at least one bullet is launched to the target area located between both ends of the tubular body, wherein the combustion temperature of the target area is between 800ºC and 1100ºC, such that the bullet breaks down into at least ammonia, which reacts with the combustion gases, thereby reducing the NOx content in the exit gases from the rotary furnace.

### DESCRIPTION OF THE DRAWINGS

In order to supplement the description being made, and in order to contribute to a better understanding of the characteristics of the invention, in accordance with a preferred practical embodiment example thereof, a set of drawings is attached as an integral part of said description, wherein the following has been represented for illustrative, non-limiting purposes:
Figure 1.- Shows a schematic view of a rotary combustion furnace.
Figure 2.- Shows a schematic view of the bullet-launching device according to the invention.
Figure 3.- Shows a section of the tubular element of the bullet-launching device according to the invention.
Figure 4.- Shows a section of a bullet-compaction element of the launching device according to the invention.

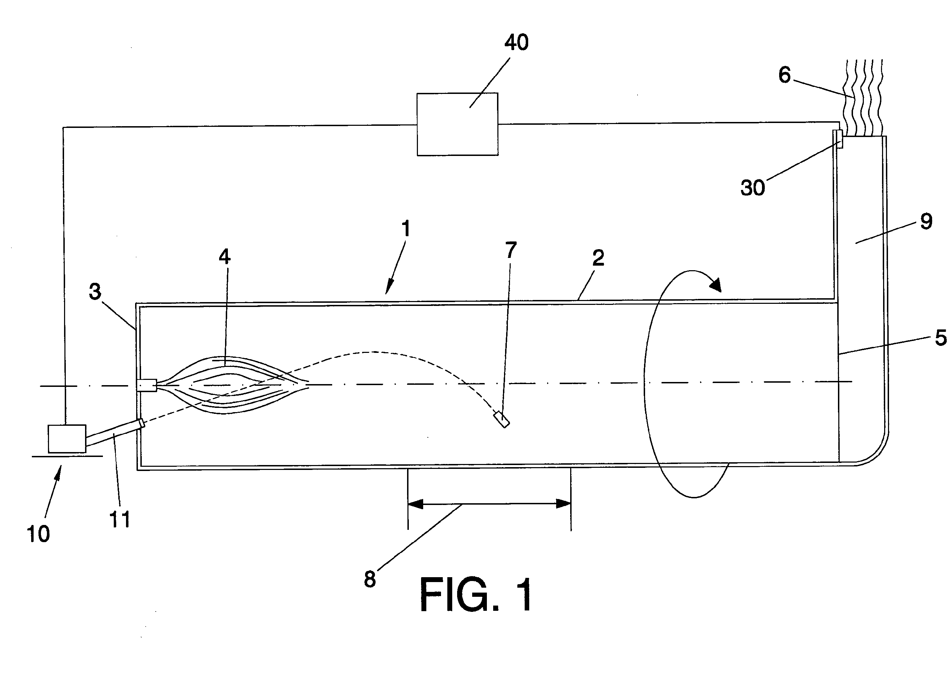

Figure 1 shows a schematic representation of a rotary furnace (1) and the process of reducing the NOx content in the exit gases (6).

The rotary furnace (1) comprises a tubular body (2), a first end (3) wherein a heat source (4) is located and a second end (5) whereby the exit gases (6) are evacuated through a chimney (9). The mineral to be decarbonised enters through this second end (5) and it exits through the first end (3), wherein the heat source (4) is located.

A process of reducing the NOx content in the exit gases (6) from the rotary combustion furnace (1) can comprise the following steps, which make it possible to select the rate of launching of the bullets (7):
- measurement of the NOx content in the exit gases (6),
- comparison of the aforementioned measurement with a pre-determined threshold value, which may be, for example, the maximum value permitted by the current legislation, and
- finally, in the event that the aforementioned measurement exceeds the pre-determined threshold value, at least one bullet (7) of an ammonia-based compound is launched.

A process can also comprise the following steps, which make it possible to modify the bullet (7) impact area, this impact area being normally located within the target area (8):
- measurement of the NOx content in the exit gases (6),
- comparison of the aforementioned measurement with a second pre-determined threshold value associated with an expected reduction of the NOx content in the exit gases (6), i.e. we determine a second threshold value as a function of the NOx reduction that we expect to obtain,
- in the event that the aforementioned measurement exceeds the second pre-determined threshold value, i.e. if, after the launching of one or more bullets (7), the aforementioned second threshold value is exceeded, the maximum NOx content reduction efficiency is not being obtained; consequently, the launch parameters of the bullet (7) are modified, in order to change the impact area thereof (7). This is due to the fact that the position of maximum NOx content reduction efficiency in the rotary furnace (1) varies as a function of the production,
- finally, at least one bullet (7) of an ammonia-based compound is launched according to the previously-modified launch parameters.

Also represented is a launching device (10) that is located next to the first end (3), wherein the heat source (4) is located. We have also represented the trajectory of the bullet (7) launched from the device (10), such that it is capable of reaching the target area (8), which is an area defined by the temperature range between 800ºC and 1100ºC.

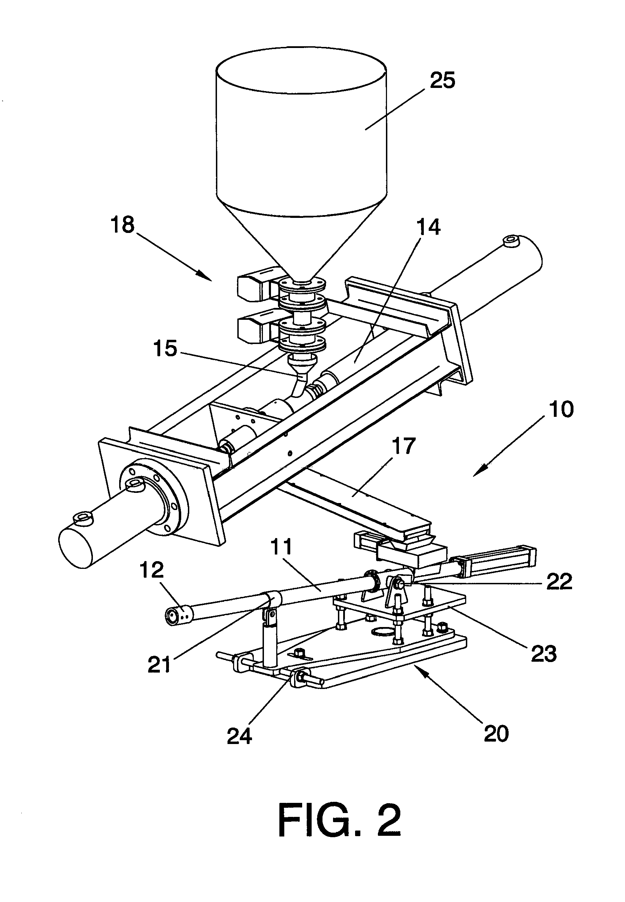

Figure 2 shows the launching device (10), which comprises a tubular element (11) the anterior end whereof (12) is adapted to be located at the first end (3) of the rotary furnace (1).

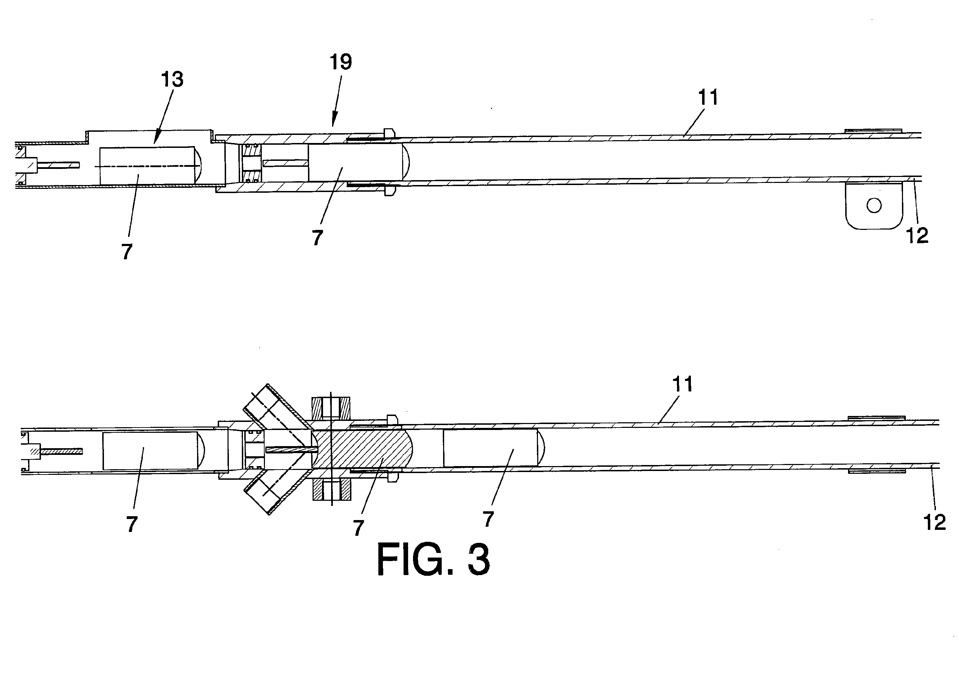

Figure 3 represents a section of the tubular element (11). Said tubular element (11) comprises intake means (13) into the tubular element (11), which are adapted for the introduction of a urea bullet (7). Once the bullet (7) is introduced into the tubular element (11), it is pushed to the shooting area (19). The bullet (7) propulsion means and the tubular element (11) are configured in such a way that the bullet (7) may be launched to the target area (8), wherein the combustion temperature is between 800ºC and 1100ºC. Therefore, the propulsion means determine the target of the bullet (7). For a specific embodiment example, these propulsion means are pneumatic, and 50 l of air at a pressure of 6 bars are introduced, thereby achieving the necessary thrust for the bullet (7) to reach the desired area inside the furnace (1).

The intake means (13) are equipped with pneumatic operation of the opening and closing of the bullet (7) entrance. If it is desired to change the bullet (7) impact area, in order to achieve the maximum efficiency in the reduction of the NOx content in the exit gases (6), the automated system acts on the shooting pressure, increasing or decreasing the distance of the bullet (7) impact area.

In order for the bullet (7) to reach the desired area, the slope of the tubular element (11) with respect to the tubular body (2) of the rotary furnace (1) is also essential. The means designed to change the slope of the tubular element (11) with respect to the rotary furnace (1) comprise an adjustable table (20). The adjustable table (20) comprises a first fixed junction element (21) to the tubular element (11) and a second junction element (22) thereto (21); the second junction element (22) comprises a pivoting junction with the tubular element (11) around an axis perpendicular to the axis of the tubular element (11), the second junction element (22) being further joined to an intermediate height-adjustable plate (23).

The adjustable table (20) further comprises means that allow for the drift adjustment thereof. To this end, the first junction element (21) is placed joined to an axis (24) that is capable of moving in the drift direction and which, therefore, also moves the tubular element (11) through the first junction element (21).

The device shown in Figure 2 further comprises a bullet (7) configuration element (14) that is connected to the intake means (13) of the tubular element (11). In this way, it is possible to have bullets (7) as a function of the necessary demand depending on the NOx content in the exit gases (6).

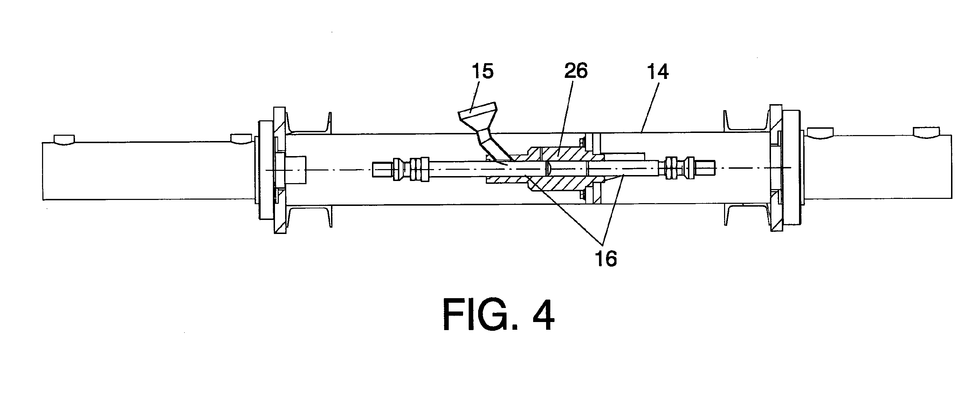

Figure 4 represents the bullet (7) configuration element (14). The configuration element (14) comprises intake means (15) for the ammonia-based compound, for example, in granulated state, compound compaction means (16) with an aerodynamic shape, for configuration of the bullet (7), which consist of face-to-face hydraulic cylinders with caps made of a high-hardness material that form the bullet's (7) geometric shape. The compaction takes place inside a compression chamber (26) whereto the compaction means (16) move. The compaction means (16) compress the urea with a force of, for example, about 100 T, thereby producing a bullet (7) with the necessary aerodynamic shape and sufficient hardness so as not to break down when shot.

The device (10) further comprises a refrigeration system for the bullet (7) configuration element (14). The refrigeration system prevents the temperature of the compression chamber (26) from rising above, for example, 50ºC, since, otherwise, degradation of the urea and fragility of the bullet (7) could ensue.

The device (10) of the invention further comprises dosing means (18), see Figure 2. These dosing means (18) make it possible to provide the necessary quantity of urea as a function of the NOx content in the exit gases (6). For a specific embodiment example, stoichiometric calculations are used to define an adequate quantity of urea for a bullet (7) containing 150 g of urea, in order to reduce the NOx emissions to the target values.

The dosing means (18) are connected to the intake means (15) of the configuration element (14).

The device (10) further comprises a urea bulk storage bin (25), which is connected to the dosing means (18).

Finally, the device (10) may further comprise a feeder (17) located between the tubular element (11) and the configuration element (14), which may be, for example, a conveyor belt that handles the bullets (7) gently, thereby preventing the breakage thereof.

Figure 1 also represents the elements of the automated system according to claims 2 and 3, such as the measurement means (30) for the NOx content in the exit gases (6) from a rotary furnace (1) and the control means (40) connected to the measurement means (30) and the device (10), which compare the value of the measurement obtained by the measurement means (30) with a threshold value and, when the aforementioned value exceeds the threshold value, act on the device (10) such that it launches at least one bullet (7) to a target area (8) located between both ends (3, 5) of the tubular body (2), wherein the combustion temperature is between 800ºC and 1100ºC, such that the bullet (7) breaks down into at least ammonia, which reacts with the combustion gases, thereby reducing the NOx content in the exit gases (6) from the rotary furnace (1).

## Claims

1. Device (10) suitable for the reduction of NOx in the exit gases (6) from a rotary combustion furnace (1), which comprises a tubular body (2), a first end (3) wherein a heat source (4) is located, and a second end (5) that is adapted for the evacuation of the exit gases (6), wherein the device comprises:
- a tubular element (11), the anterior end whereof (12) is adapted to be located at one end (3) of the rotary furnace (1),
- intake means (13) to the tubular element (11), which are adapted for the introduction of a bullet (7) of an ammonia-based compound,
- bullet propulsion means,
where the tubular element (11) and the bullet (7) propulsion means are configured in such a way that the bullet (7) is launched to a target area (8) located between both ends (3, 5) of the tubular body (2), wherein the operating combustion temperature of the target area (8) is between 800°C and 1100°C, such that the bullet (7) breaks down into at least ammonia and react with the combustion gases, thereby reducing the NOx content in the exit gases (6) from the rotary furnace (1), **characterised in that** it further comprises
- modification means of the slope of the tubular element (11) with respect to the tubular body (2) of the rotary furnace (1), in order to adjust the point of impact of the bullet (7), the modification means comprising an adjustable table (20) which comprises a first fixed junction element (21) to the tubular element (11) and a second junction element (22) thereto (11), the second junction element (22) comprising a pivoting junction to the tubular element (11) around an axis perpendicular thereto (11) and a junction to a height-adjustable plate (23),
- a bullet (7) configuration element (14) connected to the intake means (13) of the tubular element (11), wherein
the configuration element (14) comprises intake means (15) for the ammonia-based compound, compound compaction means (16) with an aerodynamic shape, for configuration of the bullet (7), and bullet (7) expulsion means for the feeding thereof into the tubular element (11), the device further comprises a refrigeration system for the bullet (7) configuration element (14) and dosing means (18) connected to the intake means (15) of the configuration element (14), for dosing of the quantity of the ammonia-based compoundadequate for reaction with the combustion gases, thereby reducing the NOx content in the exit gases (6) from the rotary furnace (1).

2. Automated system for the reduction of NOx in the exit gases (6) from a rotary combustion furnace (1), which comprises a tubular body (2), a first end (3) where a heat source (4) is located, and a second end (5) that is adapted for evacuation of the exit gases (6), **characterised in that** it comprises:
- measurement means (30) of the NOx content in the exit gases (6) from a rotary furnace (1),
- the device (10) described in claim 1, for the launching of a bullet (7) of an ammonia-based compound, adapted to be located at one of the ends (3) of the rotary furnace (1), and
- control means (40) connected to the measurement means (30) and the device (10), configured in such a way that, when operating, they compare the value of the measurement obtained by the measurement means (30) with a threshold value and, when the aforementioned value exceeds the threshold value, act on the device (10) so that it launches at least one bullet (7) to a target area (8) located between both ends (3, 5) of the tubular body (2), wherein the operating combustion temperature of the target area (8) is between 800°C and 1100°C, such that the bullet (7) breaks down into at least ammonia, which reacts with the combustion gases, thereby reducing the NOx content in the exit gases (6) from the rotary furnace (1).

3. Automated system for the reduction of NOx in the exit gases (6) from a rotary combustion furnace (1) according to claim 2, **characterised in that** the control means (40) are adapted to be connected to the measurement means (30) and the device (10), being configured in such a way that, when operating, it compares the value of the measurement obtained by the measurement means (30) with a second pre-determined threshold value and, when the aforementioned value exceeds the second pre-determined threshold value, act on the device (10) in order to modify the launch parameters of the bullet (7), to change the impact area thereof (7), and subsequently launch at least one bullet (7) of an ammonia-based compound in accordance with the modified launch parameters.

## Patentansprüche

1. Vorrichtung (10), die zur Reduzierung des NOx der Abgase (6) eines Rotationsverbrennungsofens (1) geeignet ist, die ein röhrenförmiges Gehäuse (2), ein erstes Ende (3), in dem eine Wärmequelle (4) angeordnet ist, sowie ein zweites Ende (5) umfasst, das zur Abführung der Abgase (6) ausgelegt ist, wobei die Vorrichtung umfasst:
- ein röhrenförmiges Element (11), dessen vorderes Ende (12) dazu ausgelegt ist, an einem Ende (3) des Rotationsofens (1) positioniert zu werden,
- Einlassmittel (13) zu dem röhrenförmigen Element (11), die zur Aufnahme einer Kugel (7) aus einer Verbindung auf Ammoniakbasis ausgelegt sind,
- Kugelantriebsmittel,
wobei das röhrenförmige Element (11) und die Antriebsmittel der Kugel (7) auf eine derartige Weise konfiguriert sind, dass die Kugel (7) zu einem Zielbereich (8) abgefeuert wird, der sich zwischen beiden Enden (3, 5) des röhrenförmigen Gehäuses (2) befindet, wobei die Betriebsbrenntemperatur des Zielbereichs (8) zwischen 800°C und 1100°C liegt, sodass die Kugel (7) mindestens in Ammoniak aufgespalten wird und mit den Verbrennungsgasen reagiert, wodurch der NOx-Gehalt der Abgase (6) des Rotationsofens (1) reduziert wird, **dadurch gekennzeichnet, dass** diese weiterhin Folgendes umfasst
- Änderungsmittel der Neigung des röhrenförmigen Elements (11) gegenüber dem röhrenförmigen Gehäuse (2) des Rotationsofens (1), um den Aufprallpunkt der Kugel (7) anzupassen, wobei die Änderungsmittel einen einstellbaren Tisch (20) umfassen, der ein erstes fixiertes Verbindungselement (21) an dem röhrenförmigen Element (11) und ein zweites Verbindungselement (22) an demselben (11) umfasst, wobei das zweite Verbindungselement (22) eine Schwenkverbindung an dem röhrenförmigen Element (11) um eine zu diesem (11) senkrechte Achse und eine Verbindung zu einer höhenverstellbaren Platte (23) umfasst,
- ein Konfigurationselement (14) der Kugel (7), das mit den Einlassmitteln (13) des röhrenförmigen Elements (11) verbunden ist, wobei
das Konfigurationselement (14) Einlassmittel (15) für die Verbindung auf Ammoniakbasis, Verbindungsverdichtungsmittel (16) mit einer aerodynamischen Form zur Konfiguration der Kugel (7) und Ausstoßmittel der Kugel (7) umfasst, um diese in das röhrenförmige Element (11) einzuführen, wobei die Vorrichtung weiterhin ein Kühlsystem für das Konfigurationselement (14) der Kugel (7) und Dosierungsmittel (18) umfasst, die mit den Einlassmitteln (15) des Konfigurationselements verbunden sind, um die Verbindung auf Ammoniakbasis auf eine zur Reaktion mit den Verbrennungsgasen geeignete Menge zu dosieren, wodurch der NOx-Gehalt der Abgase (6) des Rotationsofens (1) reduziert wird.

2. Automatisches System zur Reduzierung des NOx der Abgase (6) eines Rotationsverbrennungsofens (1), das ein röhrenförmiges Gehäuse (2), ein erstes Ende (3), in dem eine Wärmequelle (4) angeordnet ist, sowie ein zweites Ende (5) umfasst, das zur Abführung der Abgase (6) ausgelegt ist, **dadurch gekennzeichnet, dass** dieses Folgendes umfasst:
- Messmittel (30) des NOx-Gehalts der Abgase (6) eines Rotationsofens (1),
- die in Anspruch 1 beschriebene Vorrichtung zum Ausstoß einer Kugel (7) aus einer Verbindung auf Ammoniakbasis, die dazu ausgelegt ist, an einem der Enden (3) des Rotationsofens (1) angeordnet zu werden, und
- Steuermittel (40), die mit den Messmitteln (30) und der Vorrichtung (10) verbunden und so konfiguriert sind, dass diese bei deren Betrieb den Wert der von den Messmitteln (30) erhaltenen Messung mit einem Schwellwert vergleichen und, wenn der vorstehend genannte Wert den Schwellwert überschreitet, auf die Vorrichtung (10) einwirken, damit diese mindestens eine Kugel (7) zu einem Zielbereich (8) abfeuert, der sich zwischen beiden Enden (3, 5) des röhrenförmigen Gehäuses (2) befindet, wobei die Betriebsbrenntemperatur des Zielbereichs (8) zwischen 800°C und 1100°C liegt, sodass die Kugel (7) mindestens in Ammoniak aufgespalten wird, das mit den Verbrennungsgasen reagiert, wodurch der NOx-Gehalt der Abgase (6) des Rotationsofens (1) reduziert wird.

3. Automatisches System zur Reduzierung des NOx der Abgase (6) eines Rotationsverbrennungsofens (1) nach Anspruch 2, **dadurch gekennzeichnet, dass** die Steuermittel (40) dazu ausgelegt sind, mit den Messmitteln (30) und der Vorrichtung (10) verbunden zu werden, das auf eine solche Weise konfiguriert ist, dass dieses bei Betrieb den Wert der von den Messmitteln (30) erhaltenen Messung mit einem zweiten vordefinierten Schwellwert vergleichet und, wenn der vorstehend genannte Wert den zweiten vordefinierten Schwellwert überschreitet, auf die Vorrichtung (10) einwirkt, um die Ausstoßparameter der Kugel (7) zu modifizieren, um den Aufprallbereich derselben (7) zu ändern und anschließend mindestens eine Kugel (7) aus einer Verbindung auf Ammoniakbasis in Übereinstimmung mit den modifizierten Ausstoßparametern abzufeuern.

## Revendications

1. Dispositif (10) propre à réduire les oxydes d'azote (NOx) dans les gaz sortant (6) d'un four à combustion rotatif (1), qui comprend un corps tubulaire (2), une première extrémité (3) dans laquelle est située une source de chaleur (4), et une seconde extrémité (5) apte à évacuer les gaz sortants (6), dans lequel le dispositif comprend :
- un élément tubulaire (11) dont l'extrémité antérieure (12) est apte à être placée à une extrémité (3) du four rotatif (1),
- des moyens d'admission (13) dans l'élément tubulaire (11), qui sont adaptés à l'introduction d'une balle (7) d'un composé à base d'ammoniac,
- des moyens de propulsion de balle,
où l'élément tubulaire (11) et les moyens de propulsion de la balle (7) sont configurés de telle façon que la balle (7) est lancée dans une zone cible (8) située entre les deux extrémités (3, 5) du corps tubulaire (2), dans lequel la température de combustion opérationnelle de la zone cible (8) est comprise entre 800°C et 1100°C pour que la balle (7) se décompose au moins en l'ammoniac et réagisse avec les gaz de combustion, réduisant ainsi la teneur en NOx dans les gaz sortant (6) du four rotatif (1), **caractérisé en ce qu'**il comprend en outre :
- des moyens de modification de l'inclinaison de l'élément tubulaire (11) par rapport au corps tubulaire (2) du four rotatif (1), afin de régler le point d'impact de la balle (7), les moyens de modification comprenant une table réglable (20) qui comporte un premier élément de jonction (21) fixé à l'élément tubulaire (11) et un second élément de jonction (22) à celui-ci (11), le second élément de jonction (22) comprenant une jonction pivotante à l'élément tubulaire (11) autour d'un axe perpendiculaire à celui-ci (11) et une jonction à une plaque réglable en hauteur (23),
- un élément de configuration (14) de balle (7) relié aux moyens d'admission (13) de l'élément tubulaire (11), dans lequel
l'élément de configuration (14) comprend des moyens d'admission (15) pour le composé à base d'ammoniac, des moyens de compactage du composé (16) présentant une forme aérodynamique, pour la configuration de la balle (7), et des moyens d'expulsion de la balle (7) pour alimenter avec celle-ci l'intérieur de l'élément tubulaire (11), le dispositif comprend en outre un système de refroidissement pour l'élément de configuration (14) de balle (7) et des moyens de dosage (18) reliés aux moyens d'admission (15) de l'élément de configuration (14), pour doser la quantité appropriée du composé à base d'ammoniac pour la réaction avec les gaz de combustion, en réduisant ainsi la teneur en NOx dans les gaz sortant (6) du four rotatif (1).

2. Système automatisé pour la réduction des oxydes d'azote (NOx) dans les gaz sortant (6) d'un four à combustion rotatif (1), qui comprend un corps tubulaire (2), une première extrémité (3) où est située une source de chaleur (4), et une seconde extrémité (5) apte à évacuer les gaz sortants (6), **caractérisé en ce qu'**il comprend :
- des moyens de mesure (30) de la teneur en NOx dans les gaz sortant (6) d'un four rotatif (1),
- le dispositif (10) décrit dans la revendication 1, pour le lancement d'une balle (7) d'un composé à base d'ammoniac, apte à être placé à l'une des extrémités (3) du four rotatif (1), et
- des moyens de contrôle (40) reliés aux moyens de mesure (30) et au dispositif (10), configurés de façon que, lorsqu'ils sont en fonctionnement ils comparent la valeur de la mesure obtenue par les moyens de mesure (30) avec une valeur seuil et que, lorsque la valeur susmentionnée dépasse la valeur seuil, ils agissent sur le dispositif (10) pour qu'il lance au moins une balle (7) dans une zone cible (8) située entre les deux extrémités (3, 5) du corps tubulaire (2), dans lequel la température de combustion opérationnelle de la zone cible (8) est comprise entre 800°C et 1100°C pour que la balle (7) se décompose au moins en ammoniac qui réagit avec les gaz de combustion, réduisant ainsi la teneur en NOx dans les gaz sortant (6) du four rotatif (1).

3. Système automatisé pour la réduction des oxydes d'azote (NOx) dans les gaz sortant (6) d'un four à combustion rotatif (1) selon la revendication 2, **caractérisé en ce que** les moyens de contrôle (40) sont aptes à être reliés aux moyens de mesure (30) et au dispositif (10), étant configurés de façon que, lorsqu'ils sont en fonctionnement ils comparent la valeur de la mesure obtenue par les moyens de mesure (30) avec une seconde valeur seuil prédéfinie et que, lorsque la valeur susmentionnée dépasse la seconde valeur seuil prédéfinie, ils agissent sur le dispositif (10) afin de modifier les paramètres de lancement de la balle (7), pour changer la zone d'impact de celle-ci (7), et ensuite lancer au moins une balle (7) d'un composé à base d'ammoniac conformément aux paramètres de lancement modifiés.
